Europäisches Patentamt

European Patent Office

Office européen des brevets

(19)

(11) Veröffentlichungsnummer : **0 025 559**
**B1**

(12) **EUROPÄISCHE PATENTSCHRIFT**

(45) Veröffentlichungstag der Patentschrift :
**21.03.84**

(21) Anmeldenummer : **80105259.8**

(22) Anmeldetag : **04.09.80**

(51) Int. Cl.³ : **B 60 T 17/08**

(54) Entlüftungsvorrichtung für einen Federspeicherbremszylinder, insbesondere einen kombinierten Betriebsbrems- und Federspeicherbremszylinder.

(30) Priorität : **12.09.79 DE 2936898**
**30.10.79 DE 2943763**
**22.12.79 DE 2952236**

(43) Veröffentlichungstag der Anmeldung :
**25.03.81 Patentblatt 81/12**

(45) Bekanntmachung des Hinweises auf die Patenterteilung : **21.03.84 Patentblatt 84/12**

(84) Benannte Vertragsstaaten :
**AT CH DE FR GB IT LI NL SE**

(56) Entgegenhaltungen :
**DE-A- 1 505 574**
**DE-A- 1 906 818**
**DE-A- 1 950 443**
**DE-A- 2 308 838**
**DE-A- 2 315 217**
**DE-B- 2 218 070**
**DE-C-    520 640**
**DE-C- 1 000 245**
**GB-A- 1 186 788**

(73) Patentinhaber : **Knorr-Bremse GmbH**
**Moosacher Strasse 80**
**D-8000 München 40 (DE)**

(72) Erfinder : **Lechner, Anton, Dr.**
**Eichenweg 6**
**D-8043 Unterföhring (DE)**
Erfinder : **Pechaty, Karel**
**Belgradstrasse 86**
**D-8000 München 40 (DE)**
Erfinder : **Schuster, Waldemar**
**Grossglocknerstrasse 2d**
**D-8135 Söcking-Gartenstadt (DE)**

Entlüftungsvorrichtung für einen Federspeicherbremszylinder, insbesondere einen kombinierten Betriebs-
brems- und Federspeicherbremszylinder

Die Erfindung betrifft eine Entlüftungsvorrichtung nach dem Oberbegriff des Anspruches 1.

Bekannt sind Entlüftungseinrichtungen (DE-OS 1 505 574), bei welchen an der Außenwand des Federspeicherbremszylinders innerhalb eines zusätzlichen Gehäuses ein Membranventilmechanismus vorgesehen ist, um eine Verbindung zwischen der Federkammer des Federspeicherbremszylinders und seiner Druckkammer vornehmen zu können, wenn der Kolben des Federspeicherbremszylinders zum Zwecke des Bremsens bei Entlüftung der Druckkammer durch die Speicherfeder verschoben wird. Das dabei in der Federkammer sich vergrößernde Volumen läßt einen Unterdruck entstehen, welcher durch den vorgenannten Membran-Ventilmechanismus abgebaut wird, d. h. dieser belüftet während der Verschiebung des Kolbens des Federspeicherbremszylinders die Federkammer und führt dadurch den erwünschten Druckausgleich herbei. Wird die Bremse durch Belüften der Druckkammer des Federspeicherbremszylinders wieder gelöst, dann sperrt der Membran-Ventilmechanismus die vorgenannte Verbindung, wobei die in der Federkammer bei Verschiebung des Kolbens komprimierte Luft über ein Ventil abgeblasen werden kann.

Entlüftungsvorrichtungen der vorgenannten Art sind baulich sehr aufwendig, da sie innerhalb eines Gehäuses am Außenumfang des Federspeicherbremszylinders vorgesehen sind. Bei neueren Konstruktionen von aus Betriebsbremszylinder und Federspeicherbremszylinder bestehenden Kombizylindern ist es erforderlich, die baulichen Außenmaße möglichst klein zu halten. Gleichzeitig soll vermieden werden, daß Ventileinrichtungen des Kombizylinders durch äußere Einwirkungen, so durch Steinschlag etc. beschädigt oder zerstört werden können. Auch ist es in zunehmenden Maße erforderlich, die Federkammer des Federspeicherbremszylinders frei von korrodierenden Einflüssen zu halten.

Bekannt sind fernerhin Bremszylinderanordnungen (DE-A-19 50 443), bei welchen im Kolben des Federspeicherbremszylinders Rückschlagventile vorgesehen sind. Diese Ventile besitzen die Aufgabe, die den Kolben des Federspeicherbremszylinders beaufschlagende Druckfeder bzw. Speicherfeder durch Druckluft zusätzlich zu unterstützen. Eines der Rückschlagventile im Kolben des Federspeicherbremszylinders öffnet bei einem vorbestimmten Druck innerhalb der Druckkammer des Federspeicherbremszylinders, derart, daß die Federkammer mit einem vorbestimmten Druck geladen wird. Das zweite, im Kolben des Federspeicherbremszylinders angeordnete Rückschlagventil regelt die Luftströmung aus der Federkammer in Richtung der Druckkammer des Federspeicherbremszylinders, dahingehend, daß bei der Entlüftung der Druckkammer und sich in Bremsbetätigungsrichtung bewegendem Kolben ein Druckausgleich zwischen der Federkammer und der sich entleerenden Druckkammer stattfindet. Bremseinrichtungen der vorgenannten Konstruktion unterliegen jedoch gewissen funtionellen als auch baulichen Nachteilen. Der zum Zurückführen des Kolbens des Federspeicherbremszylinders erforderliche Lösedruck arbeitet gegenüber dem in der Federkammer bestehenden und sich ergänzenden Überdruck, weshalb Druckluftversorgungsanlagen herkömmlicher Dimension im allgemeinen nicht ausreichen. Die Federkammer ist zudem in Form eines Druckbehälters auszubilden, was bedeutet, daß erhöhter baulicher Aufwand hinsichtlich der Festigkeit, der Dichtungselemente etc. zu betreiben ist. Schließlich ist bei derartigen Bremseinrichtungen die Speicherfeder schwächer dimensioniert als bei herkömmlichen Bremszylindern der in Rede stehenden Art, da, wie vorstehend aufgeführt, die Unterstützung durch die Druckluft in der Federkammer gegeben ist. Dies wiederum birgt den Nachteil, daß die schwächer dimensionierte Speicherfeder im Haltezustand des Fahrzeuges, insbesondere während längeren Stillstands, nicht ausreicht, die Bremsen angelegt zu halten, falls die bestehenden Druckräume auch nur geringfügige Undichtigkeiten besitzen sollten. Mithin genügen derartige Bremseinrichtungen nicht den im allgemeinen bestehenden Bestimmungen, welche darin bestehen, daß ein Nutzfahrzeug durch die Speicherfeder allein sicher abgebremst und im Bremszustand gehalten werden kann. Sollte man, um diesem Nachteil zu begegnen, die Speicherfeder größer dimensionieren, dann wäre dies ein unnötiger baulicher Aufwand, zudem bergen derartige konstruktive Auslegungen die Gefahr des abrupten Blockierens der gebremsten Räder eines Nutzfahrzeuges, falls zusätzlich zur Federspeicherbremse die normale Betriebsbremse eingesetzt werden sollte.

Davon ausgehend besteht die Aufgabe der Erfindung darin, eine Entlüftungsvorrichtung der in Rede stehenden Art so auszubilden, daß diese im Inneren des Federspeicherbremszylinders bzw. Kombizylinders ohne besonderen baulichen Aufwand eingebaut werden kann. Auch soll es möglich sein, Nachrüstungen mit derartigen Entlüftungsvorrichtungen vorzunehmen, ohne daß hierzu besondere Arbeiten am Gehäuse des Federspeicherbremszylinders oder Kombizylinders erforderlich sind.

Die Lösung dieser Aufgabe kennzeichnet sich durch die Merkmale nach dem Kennzeichnungsteil des Anspruches 1 bzw. 9.

Die Entlüftungsvorrichtung ist von baulich einfacher Konstruktion, da sie ohne großen Aufwand und bei Verwendung billiger Materialen im Kolben des Federspeicherbremszylinders eingeordnet werden kann. Der Ventilstößel bzw. -kolben bedarf in gleicher Weise wie die ihn aufnehmende Bohrung keiner besonderen und somit teueren Feinbearbeitung, da eine gewisse Undichtigkeit zwischen dem Ventilstößel bzw. -kolben und der Bohrung in vorteilhafter Weise verwendet wird, um die zum Druckausgleich erforderlichen Ventilbewegungen hervorzurufen. Die Entlüftungsvorrichtung arbeitet auf kürzestem Weg, d. h. nahezu ohne Verzögerung, da die bei der Entlüftung der Druckkammer des Federspeicherbremszylinders erwünschte Verbindung im Kolben des Federspeicherbremszylinders besteht und keine Leitungs-Umwege über zusätzliche, an der Außenseite des Federspeicherbremszylinders vorgesehene Gehäuse erforderlich sind. Die Entlüftungsvorrichtung ist innerhalb des Federspeicherbremszylinders gegenüber äußerer Einwirkung geschützt, sie ist somit vollständig unbeeinflußt von Spritzwasser und Verschmutzung.

Es sind fernerhin Federspeicherbremszylinder mit Be- und Entlüftungsventil bekannt (DE-A-23 08 838), welche sich am Ende der hohl ausgebildeten Kolbenstange des Federspeicherbremszylinders befinden. Auch derartige Bremseinrichtungen arbeiten nach dem Prinzip, daß die Federkammer des Federspeicherbremszylinders mit einem bestimmten überdruck geladen wird, um eine Kraftunterstützung der eigentlichen Speicherfeder zu erreichen. Die im hohlen Inneren der Kolbenstange befindliche Ventileinrichtung, welche für das « Aufladen » und Entlüften der Federkammer dient, wird wegabhängig betätigt. Hierbei umfaßt die Kolbenstange eine baulich sehr aufwendige und mit dem Gehäuse des Federspeicherbremszylinders verbundene Hülse, d. h. der bauliche Aufwand sowohl des Zylinderkörpers selbst als auch der Ventileinrichtung ist als sehr hoch anzusehen. Im übrigen existieren vergleichbarefunktionelle Nachteile, wie sie Konstruktionen nach der DE-A-19 50 443 eigen sind.

In die Federkammer des Federspeicherbremszylinders ist nach einer Ausführungsform ein in Richtung Außenluft öffnendes, in entgegengesetzter Richtung jedoch sperrendes Rückschlagventil eingesetzt, wodurch die Druckentlastung der Federkammer bei Lösen der Federspeicherbremse sichergestellt, ein Eindringen von Schmutzteilchen und Wasser jedoch vermieden wird.

Nach einer weiteren Lösung der der Erfindung zugrunde liegenden Aufgabe kann eine Entlüftungsvorrichtung der im Federspeicherkolben verwendeten Bauform auch im Druckstück einer hohlen Kolbenstange des Federspeicherbremszylinders eines Kombizylinders verwendet werden. Hierbei ist die Federkammer vollständig abgedichtet und die Ent- und Belüftung erfolgen unter Verwendung der Entlüftungsvorrichtung über die Druckkammer des Betriebsbremszylinders und ein an sich bekanntes, an die Druckkammer angeschlossenes Schaltventil.

Vorteilhafte Ausgestaltungen und Weiterbildungen sind in weiteren Ansprüchen aufgeführt.

Die Erfindung ist nachfolgend anhand von Ausführungsbeispielen unter Bezugnahme auf die beigefügte Zeichnung erläutert.

Figur 1 ist eine Schnittansicht eines mit der erfindungsgemäßen Entlüftungsvorrichtung im Kolben des Federspeicherbremszylinders vorgesehenen Kombizylinders.

Figur 2 ist eine Schnittansicht unter Darstellung der Entlüftungsvorrichtung im Druckstück der Kolbenstange des Federspeicherbremszylinders eines Kombizylinders ; und

Figuren 3-5 sind der Fig. 1 vergleichbare Schnittansichten von weiteren Ausführungsformen der Entlüftungsvorrichtung.

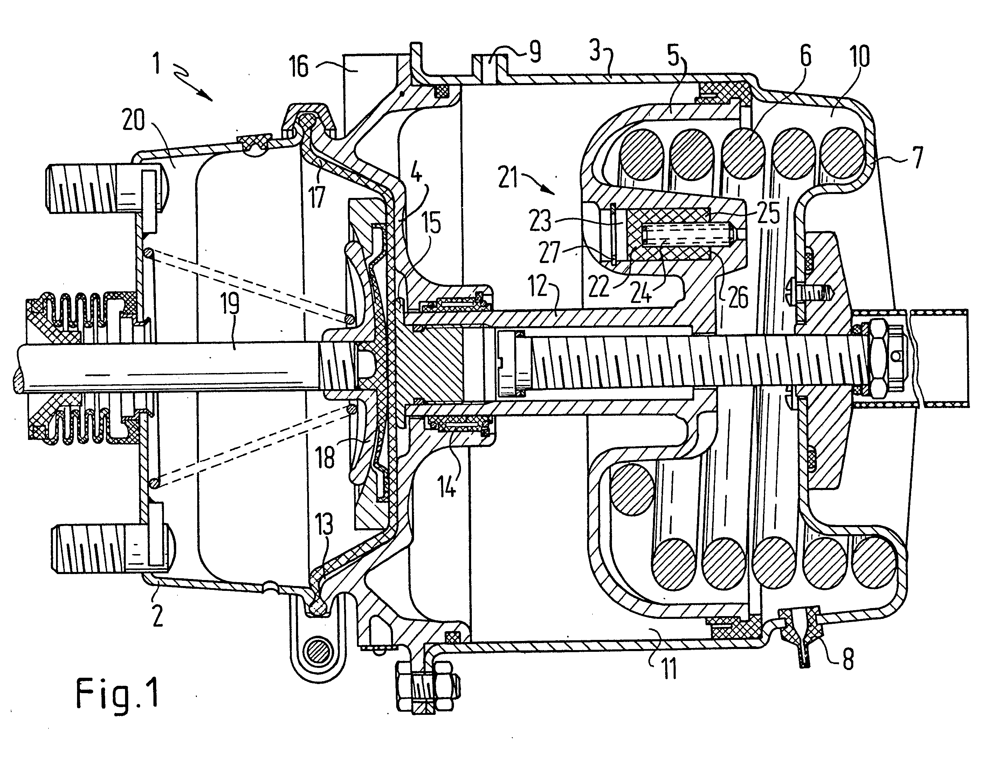

In Fig. 1 der Zeichnung ist ein kombinierter Betriebsbrems- und Federspeicherbremszylinder, nachfolgend Kombizylinder 1 genannt, dargestellt. Der Kombizylinder besteht aus dem Betriebsbremszylinder 2 und dem Federspeicherbremszylinder 3, welche durch eine Zwischenwand 4 voneinander getrennt sind. Innerhalb des Federspeicherbremszylinders ist ein Kolben 5 verschiebbar angeordnet, wobei an einer Seite des Kolbens 5 eine Speicherfeder 6 anliegt. Die Speicherfeder 6 stützt sich an ihrer entgegengesetzten Seite am Boden 7 des Federspeicherbremszylinders 3 ab. In den Boden 7 ist ein Druckentlastungsventil 8 von an sich bekannter Konstruktion eingesetzt. In die gemäß Fig. 1 links bezüglich des Kolbens 5 bestehende Kammer mündet ein Einlaß 9, über welchen ein Druckmittel eingeleitet wird, so Druckluft, um den Kolben 5 unter Verspannung der Speicherfeder 6 nach rechts gerichtet zu verschieben. Bei dieser Verschiebung des Kolbens 5 wird die Luft, welche innerhalb der die Speicherfeder 6 aufnehmenden Federkammer 10 besteht, aus dem Druckentlastungsventil 8 herausgedrückt. Wird dagegen zum Zwecke der Abbremsung der Druck in der Druckkammer 11 des Federspeicherbremszylinders bei Betätigung eines an sich bekannten, an den Einlaß 9 angeschlossenen Ventils entlastet, dann vermag die Speicherfeder 6 den Kolben 5 gemäß Darstellung in Fig. 1 nach links gerichtet zu verschieben.

Der Kolben 5 ist mit einer Kolbenstange 12 verbunden, welche sich durch die Zwischenwand 4 in den Bereich der Druckkammer 13 des Betriebsbremszylinders 2 erstreckt. Eine in der Zwischenwand 4 eingesetzte Dichtung 14 dichtet gegenüber der Außenwand der Kolbenstange während deren Längsbewegungen ab. Die Kolbenstange trägt an ihrem vorderen, in den Bereich der Druckkammer sich erstreckenden Ende unter Abdichtung ein Druckstück 15. In die Druckkammer 13 mündet ein Einlaß 16, über welchen zum Betätigen der Betriebsbremse Druckmittel, so Druckluft eingelassen wird. Diese Druckluft wirkt auf die innerhalb des Betriebsbremszylinders 2 eingesetzte Membrane 17 ein, an deren entgegengesetzter Seite ein Druckstück in Form eines Kolbenstangenkopfes 18 vorgesehen ist. Der Kolbenstangenkopf steht mit einer Kolbenstange 19 in Verbindung, die sich aus der links bezüglich der Membrane 17 bestehenden Kammer 20 des Betriebsbremszylinders 2 erstreckt und (in nicht dargestellter Weise) mit einem Bremsbetätigungsmechanismus außerhalb des Kombizylinders 1 in Verbindung steht. Hierbei kann es sich beispielsweise um die Betätigungsteile einer Keilspreizbremse oder einer S-Nockenbremse eines Kraftfahrzeuges handeln. Wird die Betriebsbremse durch Einleiten von Druckluft in den Einlaß 16 betätigt, dann verschiebt die Druckluft die Membrane 17, den Kolbenstangenkopf 18 und die Kolbenstange 19 gemäß Darstellung nach links gerichtet, so daß die an die Kolbenstange angeschlossenen Bremsbetätigungsteile in Wirkung kommen und die Bremse anlegen. Während dieser normalen Betriebsbremsung verbleibt die Federspeicherbremse in ihrer inaktiven Position, in welcher die Speicherfeder 6 durch Halten des Drucks in der Druckkammer 11 zusammengedrückt ist. Die Federspeicherbremse kann verwendet werden, wenn die Betriebsbremse ausfällt, wenn also die Druckmittelverbindung in den Einlaß 16 unterbrochen ist, oder wenn sie als sogenannte Feststellbremse benutzt werden soll. In diesem Fall wirkt sie als Parkbremse bei einem abgestellten Fahrzeug.

Die nachfolgend im einzelnen erläuterte Entlüftungsvorrichtung ist unter Bezugnahme auf einen Kombizylinder der vorgenannten Konstruktion beschrieben. Die Entlüftungsvorrichtung eignet sich natürlich auch für Federspeicherbremszylinder, welche ohne einen vorgesetzten Betriebsbremszylinder entweder ziehend oder drückend arbeiten. Derartige Federspeicherbremszylinder sind sowohl für Schienen- als auch für Straßenfahrzeuge vorgesehen. Als Betätigungszylinder können sie natürlich auch für andere Zwecke benützt werden.

In den Kolben 5 ist ein Entlüftungsventil 21 eingesetzt, welches verwendet wird, um innerhalb der Federkammer 10 einen Druckausgleich herbeizuführen, wenn der Druck zum Zwecke der vorstehend beschriebenen Bremsbetätigung innerhalb der Druckkammer 11 abgebaut wird. Bewegt sich der Kolben 5 während dieses Druckabbaus gemäß Darstellung in Fig. 1 von rechts nach links gerichtet, so vergrößert sich das Volumen in der Federkammer 10 entsprechend. Das Entlüftungsventil 21 ist vorgesehen, um während dieser Bewegung des Kolbens 5 eine Verbindung zwischen der Druckkammer 11 und der Federkammer 10 herbeizuführen, derart, daß innerhalb der im Volumen sich vergrößernden Federkammer 10 ein Druckausgleich herbeigeführt werden kann. Das vorgenannte Druckentlastungsventil 8 ist so ausgelegt, daß es diesen Druckausgleich nicht herbeiführt, d. h. es verhindert, daß Außenluft und in dieser enthaltene Schmutzteilchen in die Federkammer 10 gelangen, wenn die vorbeschriebene Volumenvergrößerung der Federkammer stattfindet. In entgegengesetzter Richtung, d. h. bei Volumenverkleinerung der Federkammer 10, ist das Druckentlastungsventil 8 jedoch funktionsfähig, derart, daß die in der Federkammer befindliche Luft abgeblasen wird, wenn der Kolben 5 zum Zwecke des Lösens der Federspeicherbremse bei Belüftung der Druckkammer 11 gemäß Fig. 1 nach rechts gerichtet verschoben und die Speicherfeder 6 entsprechend gespannt wird.

Das Entlüftungsventil 21 weist einen Entlüftungsstößel 22 auf, welcher aus Metall, aus Hartgummi bzw. einem geeigneten Elastomer bestehen kann. Der Entlüftungsstößel 22 ist ohne Abdichtung innerhalb einer Bohrung 23 geführt, die sich in dargestellter Weise im Kolben 5 befindet. Der Entlüftungsstößel ist wenigstens teilweise hohlzylindrisch ausgebildet und dient zur Aufnahme einer Feder 24, welche in nachfolgend beschriebener Weise den Entlüftungsstößel in Richtung der Druckkammer 11 zu verschieben vermag. Am rechten Ende ist der Ventilstößel mit einem Ventilsitz 25 versehen, welcher an eine als Verengung der Bohrung 23 ausgebildete Schulter 26 angedrückt werden kann. In dieser Position sperrt der Entlüftungsstößel 22 die Verbindung zwischen der Federkammer 10 und der Druckkammer 11.

Am linken Ende der Bohrung 23 ist ein Sicherungsring 27 von an sich bekannter Konstruktion eingesetzt. Dieser Sicherungsring verhindert, daß sich der Entlüftungsstößel 22 übert ein bestimmtes Maß hinaus nach links gerichtet verschieben läßt.

Die Wirkungsweise der erfindungsgemäßen Entlüftungsvorrichtung ist wie folgt :

Wird der Druck innerhalb der Druckkammer 21 zum Zwecke der Bremsbetätigung des Federspeicherbremszylinders abgebaut, also reduziert, dann bewegt sich der Kolben 5 ab einem vorbestimmten Druck nach links gerichtet. Während dieser Bewegung vergrößert sich das Volumen innerhalb der Federkammer 10, so daß der zunächst als Atmosphärendruck bestehende Druck in der Federkammer absinkt. Der sich veringernde Druck in der Druckkammer 11 und der bei Volumenvergrößerung der Federkammer in dieser vorherrschende Unterdruck vermögen zunächst, in gleicher Richtung wirkend, den Entlüftungsstößel 22 in dichtender Anlage an der flächigen Schulter 26 zu halten, wodurch die Verbindung zwischen der Federkammer 10 und der Druckkammer 11 unterbunden ist. Wird der Druck in der Druckkammer 11 weiter abgebaut, dann beginnt die Kraft der Feder 24 zu überwiegen, d. h. die Feder 24 drückt den Entlüftungsstößel 22 gegen die Wirkung des Unterdrucks in der Federkammer 10 und gegen die Wirkung des Restdrucks in der Druckkammer 11 gemäß Darstellung nach links gerichtet, derart, daß sich der Ventilsitz 25 von der Schulter 26 löst. Die in der Druckkammer 11 bestehende Druckluft gelangt über die Verbindung zwischen dem Außenumfang des Entlüftungsstößels und der Bohrung 23 und über das geöffnete, aus Ventilsitz und Schulter bestehende Ventil in das rechts befindliche Ende der Bohrung 23. Die Bohrung 23 besitzt an ihrem rechten Ende freie Verbindung mit der Federkammer, so daß der erwünschte Druckausgleich in vorbeschriebener Weise herbeigeführt wird. Das Öffnen des Entlüftungsstößels 22 kann durch entsprechende Dimensionierung der Flächenverhältnisse und durch geeignete Wahl der Feder 24 genau bestimmt werden. So ist es vorteilhaft, den Innendurchmesser des Ventilsitzes 25 klein zu halten, so daß der Unterdruck innerhalb der Federkammer 10 nur auf einer verhältnismäßig kleinen Fläche des Entlüftungsstößels zur Wirkung gelangt. Es ist auch durch geeignete Wahl der konstruktiven Parameter des Entlüftungsventils 21 möglich, dieses erst dann öffnen zu lassen, wenn der Kolben 5 bei entsprechender Entlüftung der Druckkammer 13 bereits seine Endlage, d. h. Bremslage erreicht hat.

Wird ausgehend von dem in Bremsstellung befindlichen Kolben 5 Druckluft in die Druckkammer 13 eingeleitet, um die Speicherfeder 6 zum Zwecke des Lösens der Federspeicherbremse zu spannen und um demgemäß den Kolben 5 nach rechts gerichtet zu verschieben, dann wirkt dieser steigende Druck auch auf der zugewandten Seite des Entlüftungsstößels 22 ein. Da zwischen dem Außenumfang des Entlüftungsstößels und der Wandung der Bohrung 23 ein wenn auch nur kleiner Abstand besteht, strömt die Druckluft entlang des Entlüftungsstößels und gelangt zunächst kurzfristig über den geöffneten Ventilsitz in die Federkammer 10. Die eine bestimmte Geschwindigkeit besitzende Strömende Luft beginnt im strömungsdynamischen Sinne zu wirken und nimmt hierbei den Entlüftungsstößel 22 mit, d. h. daß der Entlüftungsstößel bei beginnender Belüftung der Druckkammer 11 durch die am Außenumfang strömende Luft mitgenommen und schließlich gegen die Schulter 26 angedrückt wird. Nunmehr ist die Verbindung zwischen der Federkammer 10 und Druckkammer 11 geschlossen und der sich aufbauende Druck in der Druckkammer 11 wirkt gegenüber der zugewandten Fläche des Entlüftungsstößels, derart, daß dieser in verstärktem Maße mit seinem Ventilsitz an die Schulter 26 angedrückt wird. Das vorgenannte Schließen des Entlüftungsstößels kann bereits bei einem sehr geringen Druck eingeleitet werden, so z. B. bei 0,4 bar Überdruck. In jedem Fall ist bei ausreichender Druckerhöhung sichergestellt, daß die Verbindung zwischen Federkammer und Druckkammer unterbunden ist. Bei entsprechender, gemäß Darstellung nach rechts gerichteter Verschiebung wird die in der Federkammer 10 bestehende Luft über das Druckentlastungsventil herausgeblasen, bis die in der Zeichnung dargestellte Position erreicht ist.

Die Erfindung ist nicht auf die Verwendung des Entlüftungsstößels im Kolben eines Federspeicherbremszylinders beschränkt, unabhängig davon, ob der Federspeicherbremszylinder ohne einen Betriebsbremszylinder oder mit einem derartigen Betriebsbremszylinder in Form eines Kombizylinders verwendet wird. Die zum Druckausgleich herbeizuführende Belüftung der Federkammer des Federspeicherbremszylinders ist bei Verwendung des Ventilstößels auch möglich, wenn dieser bei hohler Kolbenstange in das Druckstück derselben eingesetzt ist, derart, daß der dichtungslos gegenüber der ihn aufnehmenden Bohrung geführte Entlüftungsstößel die Verbindung zwischen der druckkammer des Betriebsbremszylinders und der hohlen Kolbenstange des Federspeicherbremszylinders herbeiführt, wenn der Druck in der Druckkammer des Betriebsbremszylinders ausreichend abgebaut ist und die den Ventilstößel verspannende Feder diesen von seiner dichtenden Anlage an der Schulter abhebt. Da die hohle Kolbenstange mit dem Inneren der Federkammer in Verbindung steht, wird hierbei der erwünschte Druckausgleich entsprechend der Entlüftung der Druckkammer des Federspeicherbremszylinders herbeigeführt.

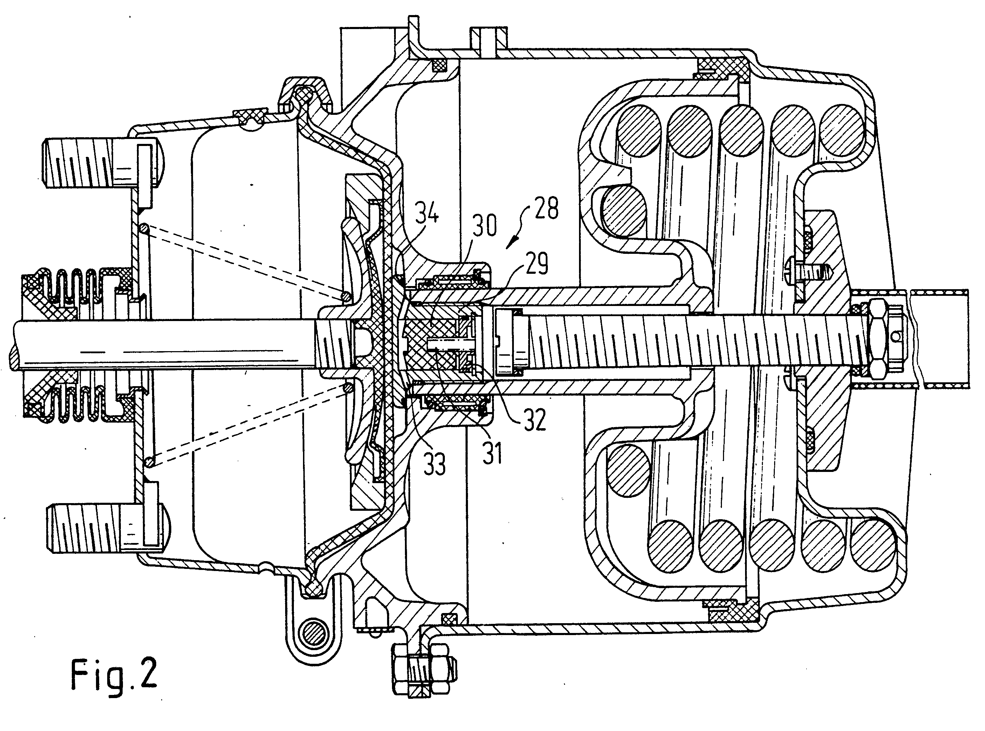

In Fig. 2 ist eine Ausführungsform eines Kombizylinders dargestellt, bei welcher ein dem Entlüftungsventil 21 vergleichbares Entlüftungsventil 28 dem Druckstück 29 der Kolbenstange 12 angeordnet ist. Das Entlüftungsventil 28 weist einen dem Entlüftungsstößel 22 vergleichbaren Entlüftungsstößel 30 auf, welcher durch eine Feder 31 in von einem Einsatzteil 32 abgewandter Richtung verspannbar ist. Das Druckstück 29 ist durch einen oder mehrere Kanäle 33 durchsetzt; normalerweise liegt das Druckstück bei gelöster Federspeicherbremse mittels einer Dichtung 34 an der Zwischenwand 4 an, wodurch die freie Verbindung in die Kanäle 33 unterbrochen ist. Bewegt sich das Druckstück 29 mit der Kolbenstange entsprechend Betätigung des Federspeicherbremszylinders 3 nach links gerichtet, so hebt die Dichtung 34 des Druckstückes von der Zwischenwand ab, derart, daß eine freie Verbindung in die Kanäle 33 besteht. Die Wirkungsweise des Entlüftungsventils 28 entspricht derjenigen des Entlüftungsventils 21, derart, daß Luft aus der während dieses Federspeicher-Bremszustandes vorzugsweise unter Atmosphärendruck gehaltenen Druckkammer 13 nach Passieren des Entlüftungsstößels 30 in die Federkammer 10 gelangen kann. Bei der Ausführungform nach Fig. 2 ist kein Druckentlastungsventil 8 erforderlich, da beim Lösen der Federspeicherbremse die nunmehr in der Federkammer 10 komprimierte Luft in umgekehrtem Sinne über das Entlüftungsventil 28, die Kanäle 33, die Druckkammer 13 und den Einlaß 16 entweicht, bis diese Verbindung nach Auflegen der Dichtung 34 an der Zwischenwand 4 unterbrochen ist. Während dieses Vorganges hebt der Entlüftungsstößel 30 vom Einsatzteil 32 ab, d. h., daß die vorbeschriebene Strömungsverbindung entlang des Außenumfange des Entlüftungsstößels 30 besteht.

Wird bei von der Zwischenwand 4 abgehobenem Druckstück 29 die Druckkammer 13 über den Einlaß 16 plötzlich mit Druck beaufschlagt, was zu einer Addierung der Betriebsbrems- und Federspeicherbremskräfte führen könnte, dann schließt der Entlüftungsstößel 30 sofort, d. h. der an ihm ausgebildete Ventilsitz, dem Ventilsitz 25 nach Fig. 1 vergleichbar, wird an den Einsatzteil 32 angepresst. Somit besitzt die Ausführungsform nach Fig. 2 den Vorteil, das sie vollkommen gekapselt ist, also keinerlei Entlastungsventil benötigt. Dadurch ist sichergestellt, daß keinerlei Schmutz oder Flüssigkeit in das Innere der Federkammer 10 gelangen kann.

Im Rahmen des der Erfindung eigenen, allgemeinen Erfindungsgedankens ist es natürlich auch möglich, auf die Feder 24 in Fig. 1 zu verzichten, wenn der Entlüftungsstößel 22 ausreichend axiale Eigenelastizität besitzt, also die der Feder 24 eigenen Rückstellkraft aufweist. Auch kann die Feder 24 im Material des Entlüftungsstößels 22 integriert, also beispielsweise eingegossen werden, Auch ist es möglich, die vorgeschriebene Entlüftungsvorrichtung in Form einer im Kolben 5 einschraubbaren Patrone anzuordnen, d. h., daß die Entlüftungsvorrichtung innerhalb eines patronenartigen Gehäuses geführt ist, welches seinerseits unter Abdichtung in eine entsprechende Gewindebohrung des Kolbens einschraubbar ist.

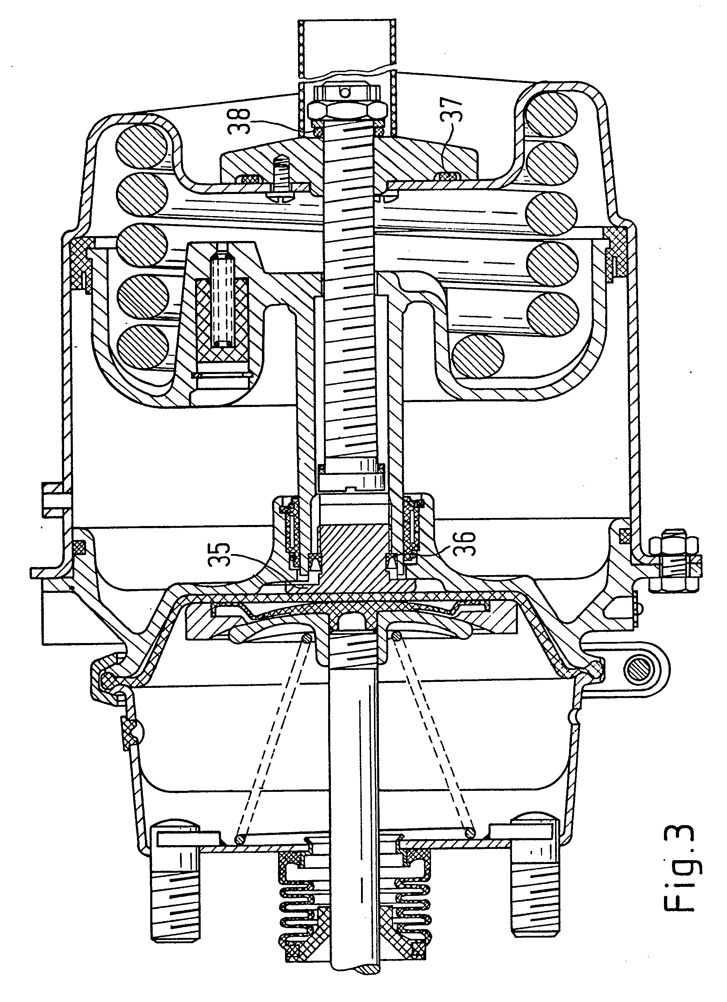

Bei der in Fig. 3 dargestellten weiteren Ausführungsform weist die Federkammer 10, vergleichbar mit der Anordnung nach Fig. 2, an ihrer Außenseite kein Entlastungsventil oder dergleichen Rückschlagelement auf, d. h., daß die Federkammer 10 absolut sicher gegenüber äußeren Einwirkungen, d. h. gegenüber Wasser und Verschmutzung abgesichert ist. Zusätzlich zum Entlüftungsventil 21, welches identisch ist mit dem nach Fig. 1 und mit welchem ein innerer Druckausgleich zwischen der Druckkammer 11 und der Federkammer 10 herbeigeführt werden kann, ist eine weitere, zur inneren Entlüftung dienende Ventileinrichtung im Bereich des Druckstückes 35 vorgesehen. Das Druckstück ist in dargestellter Weise gegenüber dem vorderen Ende der Kolbenstange 12 mit Hilfe eines Rückschlagventils 36 abgedichtet. Das Rückschlagventil 36 besitzt im dargestellten Ausführungsbeispiel die Form eines an sich bekannten Nutrings. Wird dieser Nutring mit Druck aus der Federkammer 10 und demnach aus der hohlen Kolbenstange 12 beaufschlagt, dann vermag er zu öffnen, wodurch eine Druckentlastung in Richtung der Druckkammer 13 des Betriebsbremszylinders 2 erfolgt. In umgekehrter Richtung sperrt der Nutring, d. h. wird die Druckkammer 13 des Betriebsbremszylinders zum Zwecke einer normalen Betriebsbremsung mit Druck beaufschlagt, dann ist die Verbindung zwischen der Druckkammer 13 und dem hohlen Inneren der Kolbenstange 12 absolut sicher gesperrt.

Die Federkammer 10 ist mit Hilfe von Dichtungsringen 37 und 38 absolut sicher abgedichtet, um das Eindringen von Wasser und Schmutzteilchen zu verhindern, wobei die Entlüftung des Volumens der Federkammer über das genannte Rückschlagventil 36 vorgenommen wird. Für bestimmte Anwendungsfälle kann es zweckmäßig sein, eine zusätzliche Sicherheit vorzusehen, d. h., daß die Dichtungsringe 37, 38 oder entsprechende Dichtungselemente so ausgelegt werden, daß sie im Falle eines äußeren hohen, also unnormalen hohen Druckes öffnen, um eine Entlüftung dann sicherzustellen, wenn gleichzeitig die Druckkammer 13 durch das Betriebsbremsventil mit Druck beaufschlagt sein und demnach das Rückschlagventil 36 geschlossen sein sollte.

Das Rückschlagventil 36 wurde im dargestellten Ausführungsbeispiel als Nutring dargestellt. Natürlich können auch andere, in einer Richtung öffnende Rückschlagelemente beliebiger Konstruktion verwendet werden.

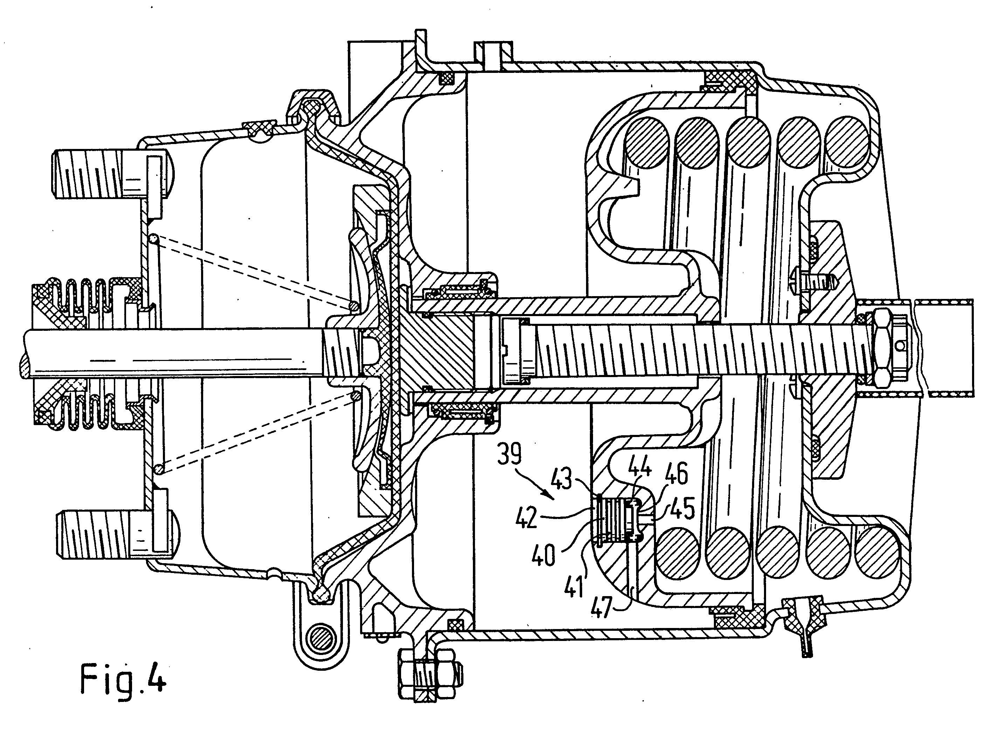

Bei der in Fig. 4 dargestellten Ausführungsform besteht im Kolben 5 ein Entlüftungsventil 39, welches verwendet wird, um innerhalb der Federkammer 10 einen Druckausgleich herbeizuführen, wenn der Druck zum Zwecke der Bremsbetätigung innerhalb der Druckkammer 13 abgebaut wird. Bewegt sich der Kolben 5 während dieses Druckabbaus gemäß Darstellung in Fig. 4 von rechts nach links gerichtet, so vergrößert sich das Volumen in der Federkammer 10 entsprechend. Das Entlüftungsventil 39 ist vorgesehen, um während dieser Bewegung des Kolbens 5 eine Verbindung zwischen der Druckkammer 11 und der Federkammer 10 herbeizuführen, derart, daß innerhalb der im Volumen sich vergrößernden Kammer 10 ein Druckausgleich herbeigeführt werden kann. Das Druckentlastungsventil 8 ist so ausgelegt, daß es diesen Druckausgleich nicht herbeiführt, d. h. es verhinder, daß es diesen Druckausgleich nicht herbeiführt, d. h. es verhindert, daß Außenluft und in dieser enthaltenen Schmutzteilchen in die Federkammer 10 gelangen, wenn die beschriebene Volumenvergrößerung der Federkammer 10 stattfindet. In entgegengesetzter Richtung ist das Druckentlastungsventil 8 jedoch vollständig funktionsfähig, derart, daß die in der Federkammer 10 befindliche Luft abgeblasen, also herausgedrückt wird, wenn der Kolben 5 zum Zwecke des Lösens der Federspeicherbremse bei Belüftung der Druckkammer 11 gemäß Darstellung in Fig. 4 nach rechts gerichtet verschoben und die Speicherfeder 6 dementsprechend gespannt wird.

Das Entlüftungsventil 39 weist einen Kolben 40 auf, welcher aus Hartgummi von beispielsweise 80 Shorer bestehen kann und welcher mittels der dargestellten Labyrinthdichtung 41 gegenüber der den Kolben durchsetzenden Bohrung verschiebbar geführt ist. Der Kolben 40 besitzt am gemäß Darstellung linken Ende einen Anschlag an einem Seeger-Ring 43 und steht an der entgegengesetzten, also nach Fig. 4 rechten Seite, unter der Verspannung einer Feder 44. In axialer Verlängerung der Bohrung 42 besteht innerhalb des Kolbens 5 eine weitere Bohrung 45 kleineren Durchmessers. Gegenüber dieser Bohrung vermag der Kolben 40 abzudichten, wenn er in nachfolgend beschriebener Weise gegenüber dem am Ende der Bohrung 45 vorgesehenen Ventilsitz 46 angedrückt wird. Von der Bohrung 42 zweigt eine weitere Bohrung 47 ab, welche so geführt ist, daß sie die Verbindung zwischen der Druckkammer 11 und dem gemäß Darstellung in Fig. 4 rechten Ende der Bohrung 42 herzustellen vermag.

Die Wirkungsweise der erfindungsgemäßen Entlüftungsvorrichtung nach Fig. 4 ist wie folgt :

Wird Druckluft in die Druckkammer eingeleitet, um die Speicherfeder 6 zum Zwecke des Lösens der Federspeicherbremse zu spannen und um demgemäß den Kolben 5 nach rechts gerichtet zu verschieben, dann wirkt dieser Druck auch auf der zugewandten Seite des Kolbens ein und verschiebt diesen gegen die Spannung der Feder 44, derart, daß der Kolben an den Ventilsitz 46 angedrückt wird. In der Lösestellung der Federspeicherbremse, d. h. bei Druck innerhalb der Druckkammer 11, bleibt der Kolben 40 immer in geschlossener Lage ; es besteht demnach keinerlei Verbindung zwischen der Bohrung 45 und der Bohrung 47.

Wird der Druck innerhalb der Druckkammer 11 zum Zwecke der Bremsbetätigung des Federspeicherbremszylinders abgebaut, also reduziert, dann bewegt sich der Kolben 5 demgemäß nach links gerichtet. Gleichzeitig öffnet das Entlüftungsventil 39, d. h. die Kraft der Feder 44 beginnt größer zu werden als die durch den Druck innerhalb der Druckkammer 11 an der entgegengesetzen Seite ausgeübte Kraft der Druckluft. Auf diese Weise wird der Kolben 40 durch die Feder 44 gegen den Seeger-Ring 43 angedrückt, so daß die Verbindung zwischen der Bohrung 45, dem rechten Ende der Bohrung 42 und der Bohrung 47 herbeigeführt wird. Der sich durch Volumenvergrößerung der Federkammer 10 (bei selbsttätigem Schließen des Druckentlastungsventils 8) einstellende Unterdruck wird auf diese Weise aufgehoben, da die in der Druckkammer 11 bestehende Druckluft über die vorgenannte Bohrungsverbindung in die Federkammer 10 gelangt und zu einer Druckentlastung in dieser Federkammer beiträgt. Figur 4 veranschaulicht die vorbeschriebene, am Beginn der Entlüftung der Druckkammer 11 bestehende Lage der Bauteile des Entlüftungsventils, wenn dieses bei nach links gerichteter Bewegung des Kolbens 5 öffnet. Befindet sich der Kolben 5 in seiner Anschlagposition an der Zwischenwand 4 und soll er zum Zwecke des Lösens der Bremse wieder in die dargestellte Lage nach Fig. 4 nach rechts gerichtet verschoben werden, so wird Druckluft in die Druckkammer 11 eingeleitet ; der Druckaufbau in der Druckkammer 11 bewirkt, daß der Kolben 40 wieder an den Ventilsitz 46 angedrückt wird, also die Verbindung zwischen der Federkammer und der Druckkammer geschlossen wird. Durch geeignete Maßnahmen wird erreicht, daß der Kolben 40 auch tatsächlich schließt und nicht durch den während der Belüftung der Druckkammer 11 zunächst auch an der rechten Seite anliegenden Druck in geöffneter Stellung gehalten wird. So kann die Bohrung 47 zu diesem Zweck einen ausreichend kleinen Durchmesser besitzen. Es ist auch zweckmäßig, den Kolben 40 als Stufenkolben (nicht dargestellt) auszubilden, derart, daß die der Druckkammer 11 zugewandte Seite eine wesentlich größere Wirkfläche besitzt als die am gemäß Darstellung rechten Ende der Bohrung 42 vorgesehene Seite des Kolbens 40. In diesem Fall ist der Kolben als Differentialkolben wirkend ausgebildet.

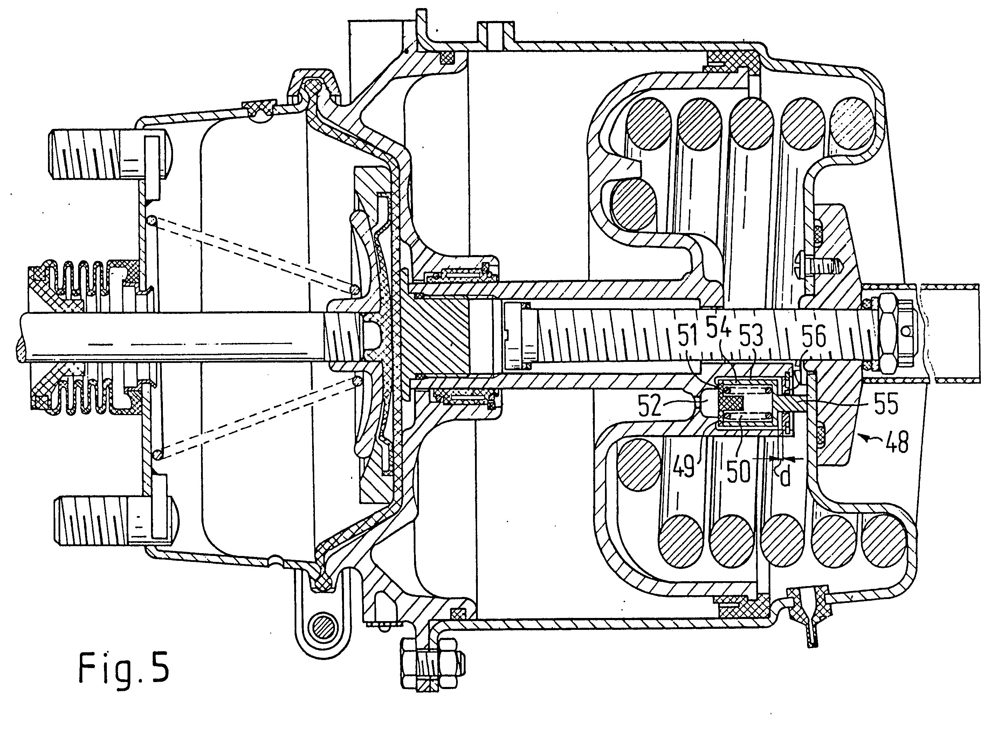

In Fig. 5 ist eine weitere Ausführungsform eines Entlüftungsventils dargestellt, mit welchem die vorbeschriebene Verbindung zwischen der Druckkammer 11 und der Federkammer 10 herbeigeführt werden kann. Das in Fig. 5 dargestellte Entlüftungsventil 48 weist eine Membrane 49 auf, welche durch Verspannung einer Feder 50 an einem Ventilsitz 51 anliegt. Der Ventilsitz 51 befindet sich am gemäß Darstellung rechten Ende einer Bohrung 52, welche im Kolben 5 vorgesehen ist und welche in eine Kammer 53 größeren Durchmessers übergeht. In dieser Kammer befindet sich ein aus Metall oder Kunststoff gefertigter Stößel 54, welcher in seinem hohlen Inneren die die Membrane 49 verspannende Feder 50 aufnimmt und sich am gemäß Darstellung rechten Ende Mittels einer Stößelverlängerung 55 durch einen gleichfalls aus Kunststoff oder Metall gefertigten Deckel 56 erstreckt. Der Deckel ist mit geeigneten Mitteln gehalten, so im dargestellten Ausführungsbeispiel mit Hilfe eines Seeger-Rings. Die vorgenannten Bauteile sind ohne gegenseitige Abdichtung innerhalb der Kammer 53 eingesetzt, so daß in nachfolgend beschriebener Weise eine Verbindung zwischen der Federkammer 10 und der Druckkammer 11 herbeigeführt ist, wenn die Membrane 49 von dem Ventilsitz 51 abhebt.

Der Stößel 54 liegt in dargestellter Weise an der Membrane 49 an, so daß diese in der Verschlußlage des Entlüftungsventils 48 gegen den Ventilsitz 51 angedrückt wird. In dieser Position besitzt das rechte Ende des Stößels 54 einen Abstand gegenüber der zugeordneten Seite des Deckels 56. Gleichzeitig liegt die Stößelverlängerung 55 am Boden 7 des Federspeicherbremszylinders 3 an, d. h., daß der Stößel bei Anschlagposition am Boden 7 die Membrane gegen den Ventilsitz 51 andrückt und dadurch die Druckmittelverbindung zwischen der Federkammer 10 und der Druckkammer 11 unterbindet.

Wird die Druckkammer 11 entlüftet, um die Bremsen mit Hilfe des Federspeicherbremszylinders zu betätigen, dann verlagert sich der Kolben 5 nach links gerichtet, derart, daß sich die Stößelverlängerung 55 von Boden 7 löst. Zu diesem Zeitpunkt streckt sich die Feder 50 und drückt den Stößel in Anschlaglage an den Deckel 56 an, wobei gleichzeitig die Federkraft entsprechend Streckung reduziert wird. Der in der Druckkammer 11 auch während des Druckabbaus noch bestehende Druck vermag die Membrane 49 sofort vom Ventilsitz abzuheben, so daß während der nach links gerichteten Verschiebung des Kolbens 5 der erwünschte Druckausgleich zwischen der Druckkammer 11 und der Federkammer 10 herbeigeführt wird, d. h. Luft strömt aus der Druckkammer 11 über das in vorstehend beschriebener Weise geöffnete Entlüftungsventil 48 in die im Volumen sich vergrö-

ßernde Federkammer 10 ein und führt hierdurch den Druckausgleich herbei. Bei vollständig abgebautem Druck innerhalb der Druckkammer 11 drückt die Feder 50 die Membrane 49 an den Ventilsitz 51 an.

Wird Druckluft in die Druckkammer 11 eingeleitet, um die Bremse durch nach rechtsgerichtetes Verschieben des Kolbens 5 wieder zu lösen, dann vermag der sich aufbauende Druck in der Druckkammer 11 oberhalb eines vorbestimmten Druckwertes die Membrane 49 vom Ventilsitz 51 abzuheben. Der hierbei auftretende Druckverluß während der Bewegung des Kolbens 5 ist jedoch äußerst gering, in jedem Falle ist die Verschiebung des Kolbens 5 in keiner Weise beeinträchtigt. Gelangt die Stößel verlängerung 55 im Verlaufe der nach rechtsgerichteten Verschiebung des Kolbens 5 in Anlage an den Boden 7 des Federspeicherbremszylinders, so schließt das Entlüftungsventil 58 sofort, da durch die vorbeschriebene Anschlagposition der Stößel 54 vom Deckel abhebt und bei gleichzeitiger Verspannung der Feder 50 die Membrane 49 an den Ventilsitz 51 angepresst wird. Nunmehr ist die Druckmittelverbindung zwischen der Druckkammer 11 und der Federkammer 10 absolut sicher unterbunden.

Es wurde vorstehend erwähnt, daß die Federkammer bei Verwendung der erfindungsgemäßen Entlüftungsvorrichtung abgedichtet sein kann, wobei die Ausführungsformen nach Fig. 2 und 3 eine vollständige Abdichtung der Federkammer vermitteln, da die Be- und Entlüftung über die Druckkammer 13 und das angeschlossene Steuer- bzw. Schaltventil des Betriebsbremszylinders erfolgen, während bei der Ausführungsform nach den Figuren 1, 4 und 5 ein Druckentlastungsventil verwendet wird, welches in Richtung der Federkammer 10 nahezu vollständig schließt, jedoch ein Herausblasen der Luft bei nach rechts gerichteter Verschiebung des Kolbens 5 ermöglicht. Anstelle des Druckentlastungsventils 8 ist es auch möglich, den Dichtungsring 37 in Form eines als Rückschlagventil wirkenden Nutrings auszubilden. Der die Federkammer in der Darstellung nach den Figuren 1-5 abdichtende Dichtungsring 38 wird in bekannter Weise nur dann von der zugewandten Außenwand des Bodens 7 abgehoben, wenn bei Ausfall der Druckversorgung für die Druckkammer 11 die Spindel-Lösevorrichtung gemäß Darstellung verwendet wird. Unabhängig davon ist es natürlich auch möglich, Lösevorrichtungen der dargestellten Art sowohl in Ruhestellung als auch in Arbeitsstellung ständig dichtend gegenüber der Federkammer zu führen.

**Ansprüche**

1. Entlüftungsvorrichtung für einen Federspeicherbremszylinder, insbesondere einen kombinierten Betriebsbrems- und Federspeicherbremszylinder, mit einem im Federspeicherbremszylinder (3) angeordneten, durch eine Speicherfeder (6) betätigbaren Kolben (5), welcher auf einer Seite von einer Druckkammer (11) und auf der entgegengesetzten Seite von der die Speicherfeder (6) aufnehmenden Federkammer (10) begrenzt ist, und mit einer bei Entlüftung der Druckkammer (11) des Federspeicherbremszylinder (3) wirkenden Ventileinrichtung, welche einen Druckausgleich innerhalb der Federkammer (10) herbeizuführen vermag, wobei die Ventileinrichtung aus einem baulich im Kolben (5) des Federspeicherbremszylinders (3) eingesetzten Entlüftungsventil (21) besteht, dadurch gekennzeichnet, daß das Entlüftungsventil (21) mit einem Entlüftungsstößel versehen ist, welcher an seinem Außenumfang dichtungslos in eine den Kolben (5) zwischen Druckkammer (11) und Federkammer (10) durchsetzende Bohrung (23) eingesetzt und mittels einer Feder (24) in Richtung der Druckkammer (11) verspannt ist, und daß der Entlüftungsstößel (22) an seinem der Federkammer (10) zugewandten Ende einen Ventilsitz (25) trägt, welcher dichtend an eine Schulter (26) der Bohrung andrückbar ist, derart, daß der Entlüftungsstößel bei dichtender Anlage des Ventilsitzes die Verbindung zwischen der Federkammer und der Druckkammer sperrt.

2. Entlüftungsvorrichtung nach Anspruch 1, dadurch gekennzeichnet, daß der Entlüftungsstößel an seinem Außenumfang gegenüber der ihn aufnehmenden Bohrung (23) ein geringes Spiel besitzt, derart, daß er bei Belüftung der Druckkammer (11) durch die den Außenumfang in Richtung der Federkammer passierende Luft mitnehmbar ist.

3. Entlüftungsvorrichtung nach Anspruch 1 oder 2, dadurch gekennzeichnet, daß der Entlüftungsstößel (22) eine in Richtung der Federkammer (10) offene Bohrung aufweist, in welcher sich das eine Ende der Feder (24) abstützt, und daß sich das entgegengesetzte Ende der Feder an einer Verengung der Bohrung (23) abstützt.

4. Entlüftungsvorrichtung für einen Federspeicherbremszylinder, insbesondere einen kombinierten Betriebsbrems- und Federspeicherbremszylinder, mit einem im Federspeicherbremszylinder (3) angeordneten, durch eine Speicherfeder (6) betätigbaren Kolben (5), welcher auf einer Seite von einer Druckkammer (11) und auf der entgegengesetzten Seite von der die Speicherfeder (6) aufnehmenden Federkammer (10) begrenzt ist, und mit einer bei Entlüftung der Druckkammer (11) des Federspeicherbremszylinder (3) wirkenden Ventileinrichtung, welche einen Druckausgleich innerhalb der Federkammer (10) herbeizuführen vermag, wobei die Ventileinrichtung aus einem baulich im Kolben (5) des Federspeicherbremszylinders (3) eingesetzten Entlüftungsventil (39) besteht, dadurch gekennzeichnet, daß das Entlüftungsventil (39) mit einem in einer Bohrung (42) des Kolbens (5) verschiebbar eingesetzten Kolben (40) versehen ist, welcher durch eine innerhalb der Bohrung (42) sich abstützenden Feder (44) in Richtung der Druckkammer (11) des Federspeicherbremszylinders verspannt ist, daß in axialer Erstreckung der Bohrung (42) eine einen Ventilsitz (46) für den Kolben (40) bildende Bohrung (45) in die Federkammer mündet, daß an dem der Federkammer (10) zugewandten Ende der Bohrung (42) eine weitere Bohrung (47) abzweigt, und daß der Kolben (40) bei Drucksenkung in der Druckkammer (11) durch die Spannkraft der Feder (44) vom Ventilsitz (46) abhebbar ist, um zum Zwecke des Druckausgleiches in der Federkammer (10) die Verbindung (Bohrung 45, Bohrung 42, Bohrung 47) zwischen der Federkammer und der Druckkammer (11) beizuführen.

5. Entlüftungsvorrichtung nach Anspruch 4, dadurch gekennzeichnet, daß der Kolben (40) durch die Feder (44) gegen einen der Druckkammer zugewandten Anschlag am Ende der Bohrung (42) verspannt ist, und daß das entgegengesetzte Ende des Kolbens bei Verschiebung desselben dichtend an den Ventilsitz (46) andrückbar ist, wenn die in der Druckkammer bestehende Druckluft entsprechend Belüftung der Druckkammer (11) die Kraft der Feder (44) überwindet.

6. Entlüftungsvorrichtung nach Anspruch 5, dadurch gekennzeichnet, daß der Kolben (40) als Stufenkolben ausgebildet ist, derart, daß die der Druckkammer (11) zugewandte Seite des Kolbens eine grössere Wirkfläche besitzt als die der Federkammer (10) zugewandte Seite.

7. Entlüftungsvorrichtung für einen Federspeicherbremszylinder, insbesondere einen kombinierten Betriebsbrems- und Federspeicherbremszylinder, mit einem im Federspeicherbremszylinder (3) angeordneten, durch eine Speicherfeder (6) betätigbaren Kolben (5), welcher auf einer Seite von einer Druckkammer (11) und auf der entgegengesetzten Seite von der die Speicherfeder (6) aufnehmenden Federkammer (10) begrenzt ist, und mit einer bei Entlüftung der Druckkammer (11) des Federspeicherbremszylinders (3) wirkenden Ventileinrichtung, welche eine Druckausgleich innerhalb der Federkammer (10) herbeizuführen vermag, wobei die Ventileinrichtung aus einem baulich im Kolben (5) des Federspeicherbremszylinders (3) eingesetzten Entlüftungsventil (48) besteht, dadurch gekennzeichnet, daß das Entlüftungsventil (48) eine in einer durchgehenden Bohrung des Kolbens (5) geführte, durch eine Feder (50) in Verschlußlage an einen Ventilsitz (51) anpreßbare Membrane (49) aufweist, so daß die Membrane bei einem Druck innerhalb der Druckkammer (11) des Federspeicherbremszylinders gegen die Kraft der Feder (50) vom Ventilsitz abhebbar ist, um die Verbindung zwischen der Druckkammer (11) und der Federkammer (10) herzustellen, und daß sich das bezüglich der Membrane entgegengesetzte Ende der Feder (50) an einem Anschlagelement abstützt, welches in Anschlagpostion am Boden (7) des Federspeicherbremszylinders, gleichzeitig an der Membrane (49) anliegend, diese gegen den Ventilsitz (51) andrückt, um bei belüfteter Druckkammer (11) die Druckmittelverbindung zwischen der Federkammer (10) und der Druckkammer (11) zu unterbinden.

8. Entlüftungsvorrichtung nach Anspruch 7, dadurch gekennzeichnet, daß das Anschlagelement aus einem Stößel (54) besteht, welcher an seinem der Membrane (49) zugewandten Ende hohl ausgebildet ist und in seinem inneren die Feder (50) aufnimmt, und daß sich das entgegengesetzte Ende des Stößels (54) in Form einer Stößelverlängerung (55) in Richtung des Bodens (7) des Federspeicherbremszylinders erstreckt.

9. Entlüftungsvorrichtung für einen Federspeicherbremszylinder bei Verbindung desselben mit einem Betriebsbremszylinder, mit einem im Federspeicherbremszylinder (3) angeordneten, durch eine Speicherfeder (6) betätigbaren Kolben (5), welcher auf einer Seite von einer Druckkammer (11) und auf der entgegengesetzten Seite von der die Speicherfeder (6) aufnehmenden Federkammer (10) begrenzt ist, und mit einer bei Entlüftung der Druckkammer (11) des Federspeicherbremszylinders wirkenden Ventileinrichtung, welche einen Druckausgleich innerhalb der Federkammer (10) herbeizuführen vermag, wobei die Ventileinrichtung in die hohl ausgebildete und ständig mit der Federkammer (10) in Verbindung stehende Kolbenstange (12) eingesetzt ist, derart, daß die Ventileinrichtung einen Entlüftungsstößel (30) aufweist, welcher in das das freie Ende der Kolbenstange (12) schließende Druckstück (29) eingesetzt und gegenüber der ihn aufnehmenden Bohrung im Druckstück (29) verschiebbar geführt ist, wobei die Bohrung das Druckstück durchsetzt und die Verbindung zwischen der Druckkammer (13) des Betriebsbremszylinders und der hohlen Kolbenstange (12) des Federspeicherbremszylinders herstellt, dadurch gekennzeichnet, daß der Entlüftungsstößel (30) durch eine Feder (31) in Richtung der Druckkammer (13) des Betriebsbremszylinders verspannt ist, daß der Entlüftungsstößel (30) an seirem der Druckkammer (11) des Federspeicherbremszylinders (3) zugewandten Ende einen Ventilsitz trägt, welcher zum Zwecke der Abdichtung der Verbindung zwischen der hohlen Kolbenstange und der Druckkammer (13) an eine Schulter der Bohrung im Druckstück andrückbar ist, und daß in einer der Zwischenwand (4) zwischen Betriebsbremszylinder (2) und Federspeicherbremszylinder (3) zugewandten Anlagefläche des Druckstückes (29) eine Dichtung (34) vorgesehen ist, derart, daß die Verbindung zwischen der Druckkammer (13) des Betriebsbremszylinders und dem Entlüftungsstößel (30) bei gelöstem Federspeicherbremszylinder gesperrt ist.

**Claims**

1. Ventilating device for a spring-loaded brake cylinder, in particular a combined service brake- and spring-loaded brake cylinder, with a piston (5) disposed in the spring-loaded brake cylinder (3) and actuatable by means of a pre-loaded spring (6), which piston is limited on one side by a pressure chamber (11) and on the opposite side by the spring chamber (10) receiving the pre-loaded spring (6), and with a valve device working during ventilation of the pressure chamber (11) of the spring-loaded brake cylinder (3), which device can bring about a pressure compensation inside the spring chamber (10), whereby the valve device consists of a ventilating valve (21) structurally inserted in the piston (5) of the spring-loaded brake cylinder (3), characterised in that the ventilating valve (21) is provided with a ventilating rod which is inserted at its outer circumference without sealing into a bore (23) penetrating the piston (5) between the pressure chamber (11) and the spring chamber (10), and is loaded by means of a spring (24) in the direction of the pressure chamber (11), and in that the ventilating rod (22) carries at its end facing the spring chamber (10) a valve seat (25) which can be pressed in seal tight manner against a shoulder (26) of the bore, in such a way that the ventilating rod blocks the connection between the spring chamber and the pressure chamber when the valve seat is installed in seal tight manner.

2. Ventilating device according to claim 2, characterised in that the ventilating rod has at its outer circumference a slight clearance opposite the bore (23) which holds it, such that it can be carried along when the pressure chamber (11) is ventilated by the air passing along the outer circumference in the direction of the spring chamber.

3. Ventilating device according to claim 1 or 2, characterised in that the ventilating rod (22) has a bore open in the direction of the spring chamber (10), in which bore there is supported one end of the spring (24), and in that the opposite end of the spring is supported on a narrowing of the bore (23).

4. Ventilating device for a spring-loaded brake cylinder, in particular a combined service brake- and spring-loaded brake cylinder, with a piston (5) disposed in the spring-loaded brake cylinder (3) and actuatable by a pre-loaded spring (6), which piston is limited on one side by a pressure chamber (11) and on the opposite side by the spring chamber (10) receiving the pre-loaded spring (6), and with a valve device working during ventilation of the pressure chamber (11) of the spring-loaded brake cylinder (3), which device can bring about a pressure compensation inside the spring chamber (10), whereby the valve device consists of a ventilating valve (39) inserted structarally in the piston (5) of the spring-loaded brake cylinder (3), characterised in that the ventilating valve (39) is provided with a piston (40) displaceably inserted in a bore (42) of the piston (5), which piston (40) is loaded in the direction of the pressure chamber (11) of the spring-loaded brake cylinder by a spring (44) supported inside the bore (42), in that in the axial extension of the bore (42) there opens into the spring chamber a bore (45) forming a valve seat (46) for the piston (40), in that at the end of the bore (42) facing the spring chamber (10) there branches off a further bore (47), and in that when there is a drop in pressure in the pressure chamber (11), the piston (40) can be lifted from the valve seat (46) by the force of the spring (44), in order to bring about the connection (bore 45, bore 42, bore 47) between the spring chamber and the pressure chamber (11) for the purpose of pressure compensation in the spring chamber (10).

5. Ventilating device according to claim 4, characterised in that the piston (40) is loaded by the spring (44) against a stop at the end of the bore (42) that faces the pressure chamber, and in that the opposite end of the piston can be pressed in seal-tight manner onto the valve seat (46) during shifting of the same piston end when the compressed air existing in the pressure chamber overcomes the force of the spring (44) corresponding to the ventilation of the pressure chamber (11).

6. Ventilating device according to claim 5, characterised in that the piston (40) is constructed as a stepped piston in such a way that the side of the piston facing the pressure chamber (11) has a larger effective area than the side facing the spring chamber (10).

7. Ventilating device for a spring-loaded brake cylinder, in particular a combined service brake- and spring-loaded brake cylinder, with a piston (5) disposed in the spring-loaded brake cylinder (3) and actuatable by means of a pre-loaded spring (6), which piston is limited on one side by a pressure chamber (11) and on the opposite side by the spring chamber (10) receiving the pre-loaded spring (6), and with a valve device working during ventilation of the pressure chamber (11) of the spring-loaded brake cylinder (3), which device can bring about a pressure comprensation inside the spring chamber (10), whereby the valve device consists of a ventilating valve (48) structurally inserted in the piston (5) of the spring-loaded brake cylinder (3), characterised in that the ventilating valve (48) has a diaphragm (49) guided in a through-bore of the piston (5), and which can be pressed onto a valve seat (51) by a spring (50) in the closed position so that the diaphragm can be lifted from the valve seat against the force of the spring (50) when there is a pressure inside the pressure chamber (11) of the spring-loaded brake cylinder, in order to produce the connection between the pressure chamber (11) and the spring chamber (10), and in that the end of the spring (50) that is opposite with respect to the diaphragm is supported on a stop élement which, in the stop position, abutting the base (7) of the spring-loaded brake cylinder and at the same time the diaphragm (49), presses this diaphragm against the valve seat (51), in order to eliminate the pressure connection between the spring chamber (10) and the pressure chamber (11) when the pressure chamber (11) is ventilated.

8. Ventilating device according to claim 7, characterised in that the stop element consists of a rod (54) which is made to be hollow at its end facing the diaphragm (49), and in its inside receives the spring (50), and in that the opposite end of the rod (54) extends in the form of a rod extension (55) in the direction of the base (7) of the spring-loaded brake cylinder.

9. Ventilating device for a spring-loaded brake cylinder in the connection of the same with a service brake cylinder, with a piston (5) arranged in the spring-loaded brake cylinder (3) and actuatable by means of a pre-loaded spring (6), which piston is limited on one side by a pressure chamber (11) and on the opposite side by the spring chamber (10) receiving the pre-loaded spring (6), and with a valve device working during ventilation of the pressure chamber (11) of the spring-loaded brake cylinder, which device can bring about a pressure compensation inside the spring chamber (10), whereby the valve device is inserted into the piston rod (12) that is made to be hollow and is constantly connected to the spring chamber (10), in such a way that the valve device has a ventilating rod (30), which is inserted into the thrust piece (29) closing the free end of the piston rod (12) and is guided displaceably with respect to the bore in the thrust piece (29) that receives it, whereby the bore penetrates the thrust piece and produces the connection between the pressure chamber (13) of the service brake cylinder and the hollow piston rod (12) of the spring-loaded brake cylinder, characterised in that the ventilating rod (30) is loaded by a spring (31) in the direction of the pressure chamber (13) of the service brake cylinder, in that the ventilating rod (30) carries at its end facing the pressure chamber (11) of the spring-loaded brake cylinder (3) a valve seat which, for the purpose of sealing the connection between the hollow piston rod and the pressure chamber (13), can be pressed against a shoulder of the bore in the thrust piece, and in that in a contact surface of the thrust piece (29) facing the intermediate wall (4) between the service brake cylinder (2) and the spring-loaded brake cylinder (3) there is provided a seal (34) in such a way that the connection between the pressure chamber (13) of the service brake cylinder and the ventilating rod (30) is blocked when the spring-loaded brake cylinder is released.

**Revendications**

1. Dispositif de mise à l'atmosphère pour un cylindre de frein à ressort à accumulation d'énergie, en particulier pour un cylindre combiné de frein de service et de frein à ressort à accumulation d'énergie, du type comportant un piston (5) disposé dans le cylindre de frein à ressort à accumulation d'énergie (3) et susceptible d'être commandé par un ressort à accumulation d'énergie (6), lequel piston est limité, sur un côté, par une chambre de pression (11) et, sur le côté opposé, par la chambre à ressort (10) qui reçoit le ressort à accumulation d'énergie (6), et du type comportant un dispositif à soupape qui agit lors de la mise à l'atmosphère de la chambre de pression (11) du cylindre de frein à ressort à accumulation d'énergie (3), lequel dispositif à soupape conduit à un équilibrage de la pression qui règne dans la chambre à ressort (10), le dispositif à soupape étant constitué par une soupape de mise à l'atmosphère (21) insérée, en tant qu'unité de construction, dans le piston (5) du cylindre de frein à ressort à accumulation d'énergie (3), caractérisé par le fait que la soupape de mise à l'atmosphère (21) est pourvue d'un poussoir de mise à l'atmosphère qui est inséré, sans moyens d'étanchéité sur sa périphérie, dans un perçage (23) qui traverse le piston (5) entre la chambre de pression (11) et la chambre à ressort (10), et est armé à l'aide d'un ressort (24) en direction de la chambre de pression (11) et que le poussoir de mise à l'atmosphère (22) porte, du côté qui est voisin de la chambre à ressort (10), un siège de soupape (25) qui est susceptible d'être appliqué avec étanchéité contre un épaulement (26) du perçage, de telle façon que le poussoir de mise à l'atmosphère, lorsqu'il porte de façon étanche contre le siège de soupape, interrompt la liaison entre la chambre à ressort et la chambre de pression.

2. Dispositif de mise à l'atmosphère selon la revendication 1, caractérisé par le fait que le poussoir de mise à l'atmosphère possède, sur sa périphérie extérieure, un faible jeu par rapport au perçage (23) qui le reçoit, la réalisation étant telle que lors de la mise sous pression de la chambre à pression (11), il est susceptible d'être entraîné par l'air qui passe par la périphérie extérieure, en direction de la chambre à ressort.

3. Dispositif de mise à l'atmosphère selon la revendication 1 ou 2, caractérisé par le fait que le poussoir de mise à l'atmosphère (22) comporte un perçage qui est ouvert en direction de la chambre à ressort (10), perçage dans lequel prend appui l'une des extrémités du ressort (24), et que l'extrémité opposée du ressort prend appui contre un rétrécissement du perçage (23).

4. Dispositif de mise à l'atmosphère pour un cylindre de frein à ressort à accumulation d'énergie, en particulier pour un cylindre combiné de frein de service et de frein à ressort à accumulation d'énergie, du type comportant un piston (5) disposé dans le cylindre de frein à ressort à accumulation d'énergie (3) et susceptible d'être commandé par un ressort à accumulation d'énergie (6), lequel piston est limité, sur un côté, par une chambre de pression (11) et, sur le côté opposé, par la chambre à ressort (10) qui reçoit le ressort à accumulation d'énergie (6), et du type comportant un dispositif à soupape qui agit lors de la mise à l'atmosphère de la chambre de pression (11) du cylindre de frein à ressort à accumulation d'énergie (3), lequel dispositif à soupape conduit à un équilibrage de la pression qui règne dans la chambre à ressort (10), le dispositif à soupape étant constitué par une soupape de mise à l'atmosphère (21) insérée, en tant qu'unité de construction, dans le piston (5) du cylindre de frein à ressort à accumulation d'énergie (39), caractérisé par le fait que la soupape de mise à l'atmosphère (39) est pourvue d'un piston (40) qui est monté dans un perçage (42) du piston (5) pour pouvoir s'y déplacer, lequel piston (40) est armé en direction de la chambre de pression (11) du cylindre de frein à ressort à accumulation d'énergie à l'aide d'un ressort (44) qui prend appui dans le perçage (42), que dans le sens axial du perçage (42), débouche dans la chambre à ressort un perçage (45) qui forme un siège de soupape (46) pour le piston (40), qu'au niveau de l'extrémité du perçage (42) qui est voisin de la chambre à ressort (10) bifurque un second perçage (47), et que le piston (40), lorsque la pression baisse dans la chambre de pression (11),. est susceptible d'être soulevé du siège de soupape (46) par la force du ressort (44) afin d'établir, dans le but de l'équilibrage de la pression dans la chambre à ressort (10), la liaison (perçage 45, perçage 42, perçage 47) entre la chambre à ressort et la chambre à pression (11).

5. Dispositif de mise à l'atmosphère selon la revendication 4, caractérisé par le fait que le piston (14) est refoulé par le ressort (44) contre une butée située du côté de la chambre à pression, à l'extrémité du perçage (42), et que l'extrémité opposée du piston, lorsque ce dernier est déplacé, est susceptible d'être appliquée avec étanchéité contre le siège de soupape (46), lorsque l'air comprimé qui est contenu dans la chambre de pression, en fonction de l'alimentation en air comprimé de la chambre de pression (11), surmonte la force du ressort (44).

6. Dispositif de mise à l'atmosphère selon la revendication 5, caractérisé par le fait que le piston (40) est réalisé sous la forme d'un piston à épaulements, la réalisation étant telle que le côté du piston qui est situé du côté de la chambre de pression (11) possède une surface active qui est plus grande que celle du côté qui est voisin de la chambre à ressort (10).

7. Dispositif de mise à l'atmosphère pour un cylindre de frein à ressort à accumulation d'énergie, en particulier pour un cylindre combiné de frein de service et de frein à ressort à accumulation d'énergie du type comportant un piston (5) disposé dans le cylindre de frein à ressort à accumulation d'énergie (3) et susceptible d'être commandé par un ressort à accumulation d'énergie (6), lequel piston est limité, sur un côté, par une chambre de pression (11) et, sur le côté opposé, par la chambre à ressort (10) qui reçoit le ressort à accumulation d'énergie (6), et du type comportant un dispositif à soupape qui agit lors de la mise à l'atmosphère de la chambre de pression (11) du cylindre de frein à ressort à accumulation d'énergie (3), lequel dispositif à soupape conduit à un équilibrage de la pression qui règne dans la chambre à ressort (10), le dispositif à soupape étant constitué par une soupape de mise à l'atmosphère (48) insérée, en tant qu'unité de construction, dans le piston (5) du cylindre de frein à ressort à accumulation d'énergie (48), caractérisé par le fait que la soupape de mise à l'atmosphère (48) comporte une membrane (49) guidée dans un perçage traversant du piston (5) et susceptible d'être appliquée par un ressort (50), dans la position de fermeture, contre un siège de soupape (51), de manière que la membrane, dans le cas d'une pression qui règne dans la chambre de pression (11) du cylindre de frein à ressort à accumulation d'énergie, soit susceptible d'être soulevée du siège de soupape, à l'encontre de la force du ressort (50), afin d'établir la liaison entre la chambre de pression (11) et la chambre à ressort (10), et que l'extrémité du ressort (50) qui est située à l'opposé de la membrane, prend appui contre un élément de butée qui, dans la position de butée porte contre le fond (7) du cylindre de frein à ressort à accumulation d'énergie, et en même temps contre la membrane (49), refoulant celle-ci contre le siège de soupape (51) afin d'interdire, lorsque la chambre de pression (11) est alimentée, la liaison en milieu sous pression entre la chambre à ressort (10) et la chambre de pression (11).

8. Dispositif de mise à l'atmosphère selon la revendication 7, caractérisé par le fait que l'élément de butée est constitué par un poussoir (54) qui est creux à son extrémité qui est voisine de la membrane (49) et qui reçoit, en son intérieur, le ressort (50), et que l'extrémité opposée du poussoir (54) s'étend, sous la forme d'un prolongement de poussoir (55), en direction du fond du cylindre de frein à ressort accumulateur d'énergie.

9. Dispositif de mise à l'atmosphère pour un cylindre de frein à ressort à accumulation d'énergie pour le cas de sa liaison avec un cylindre de frein de service, du type comprenant un piston (5) disposé dans le cylindre de frein à ressort à accumulation en énergie (3) et susceptible d'être commandé par un ressort à accumulation en énergie (6), lequel piston est limité d'un côté par une chambre de pression (11) et du côté opposé par une chambre à ressort (10) recevant le ressort à accumulation en énergie (6), et du type comportant un dispositif à soupape agissant lors de la mise à l'atmosphère de la chambre de pression (11) du cylindre de frein à ressort à accumulation en énergie, lequel dispositif à soupape est capable de réaliser une compensation de la pression dans la chambre à ressort (10), le dispositif à soupape étant inséré dans la tige de piston (12) réalisée de façon creuse et en liaison permanente avec la chambre à ressort (10), de manière que le dispositif à soupape comporte un poussoir de mise à l'atmosphère (30) qui est inséré dans la pièce de pression (29) qui obture l'extrémité libre de la tige de piston (12) et est déplaçable par rapport au perçage ménagé dans la pièce de pression (29) qui le reçoit, le perçage traversant la pièce de pression et établit la liaison entre la chambre de pression (13) du cylindre de frein de service et de la tige de piston creuse (12) du cylindre de frein à ressort à accumulation d'énergie, caractérisé par le fait que le poussoir de mise à l'atmosphère (30) est armé par un ressort (31) en direction de la chambre de pression (13) du cylindre de frein de service, que le poussoir de mise à l'atmosphère (30) porte, à son extrémité qui est voisine de la chambre de pression (11) du cylindre de frein à ressort à accumulation d'énergie (3), un siège de soupape qui, en vue de rendre étanche la liaison entre la tige de piston creuse et la chambre de pression (13), est susceptible d'être appliqué contre un épaulement du perçage ménagé dans la pièce de pression, et que dans une surface d'appui de la pièce de pression (29), qui est voisine de la paroi intermédiaire (4) entre le cylindre de frein de service (2) et le cylindre de frein à ressort à accumulation d'énergie (3), est prévu un moyen d'étanchéité (34) qui ferme la liaison entre la chambre de pression (3), du cylindre de frein de service et le poussoir de mise à l'atmosphère (30), lorsque le cylindre de frein à ressort à accumulation d'énergie est desserré.

Fig.1

0 025 559

Fig.2

34 30 28

29

32

33 31

0 025 559

Fig.3

35

36

38

37

0 025 559

Fig. 4

Fig.5